# EUROPEAN PATENT APPLICATION

(11) **EP 4 831 060 A1**
(43) Date of publication of application: **28.10.2026**
(21) Application number: 26174911.3
(22) Date of filing: 27.04.2026
(51) Int. Cl.: B64C 11/02

(54) **AIRCRAFT PROPULSOR ROTOR WITH AIR PASSAGES IN ROTOR BASE**

(30) Priority: 25.04.2025 US 202519190274
(71) Applicant: RTX Corporation, Farmington, CT 06032 (US)
(72) Inventor: MORTON, Jeffrey T., Manchester, 06040 (US); MULDOON, Marc J., Marlborough, 06447 (US)
(74) Representative: Dehns

(57) **Abstract**

An aircraft propulsion system (20) assembly includes a rotor base (40) and a plurality of propulsor blades (42). The rotor base (40) includes a hub (44), a nose cone (46) and a plurality of air passages (168). The nose cone (46) projects axially from the hub (44) to a forward tip end (50) of the rotor base (40). The air passages (168) are arranged in an array and located radially inboard of an outer periphery of the hub (44). The air passages (168) project axially through the rotor base (40). The air passages (168) respectively include a plurality of passage inlets (170) and a plurality of passage outlets (172). The passage inlets (170) are formed in the nose cone (46). The passage outlets (172) are formed in the hub (44). The propulsor blades (42) are arranged circumferentially about the rotor base (40) in an array. The propulsor blades (42) are mounted to the hub (44). The propulsor blades (42) project radially out from the outer periphery of the hub (44) respectively to a plurality of blade tips (54).

## Description

### TECHNICAL FIELD

This disclosure relates generally to an aircraft and, more particularly, to a propulsion system for the aircraft.

### BACKGROUND INFORMATION

Various types and configurations of aircraft propulsion systems are known in the art, including those with one or more open propulsor rotors. While these known aircraft propulsion systems have various benefits, there is still room in the art for improvement.

### SUMMARY

According to an aspect of the present invention, an assembly is provided for an aircraft propulsion system. This assembly includes a rotor base and a plurality of propulsor blades. The rotor base is configured to rotate about an axis. The rotor base includes a hub, a nose cone and a plurality of air passages. The nose cone projects axially along the axis out from the hub to a forward tip end of the rotor base. The air passages are arranged circumferentially about the axis in an array and located radially inboard of an outer periphery of the hub. The air passages project axially through the rotor base. The air passages respectively include a plurality of passage inlets and a plurality of passage outlets. The passage inlets are formed in the nose cone. The passage outlets are formed in the hub. The propulsor blades are arranged circumferentially about the rotor base in an array. The propulsor blades are mounted to the hub. The propulsor blades project radially out from the outer periphery of the hub respectively to a plurality of blade tips.

According to another aspect of the present invention, another assembly is provided for an aircraft propulsion system. This assembly includes a rotor base and a plurality of propulsor blades. The rotor base is configured to rotate about an axis. The rotor base includes a hub, a nose cone and a plurality of channels. The nose cone projects axially along the axis out from the hub to a forward tip end of the rotor base. The channels are arranged circumferentially about the axis in an array. Each of the channels extends axially through the nose cone and the hub. Each of the channels projects radially into the hub and the nose cone from an outer periphery of the rotor base. The channels include a first channel and a second channel circumferentially neighboring the first channel. The propulsor blades are arranged circumferentially about the rotor base in an array. The propulsor blades are mounted to the hub. The propulsor blades project radially out from the outer periphery of the rotor base respectively to a plurality of blade tips. The propulsor blades include a first propulsor blade. A connection between the first propulsor blade and the hub is located circumferentially between the first channel and the second channel.

According to still another aspect of the present invention, another assembly is provided for an aircraft propulsion system which includes an open propulsor rotor. The open propulsor rotor includes a rotor base and a plurality of propulsor blades. The open propulsor rotor is configured to rotate about an axis. The rotor base includes a hub, a nose cone and a plurality of air compression passages. The nose cone projects axially along the axis out from the hub to a forward tip end of the rotor base. The air compression passages are arranged circumferentially about the axis in an array and located radially inboard of an outer periphery of the hub. The air compression passages project axially through the nose cone and the hub. The propulsor blades are arranged circumferentially about the rotor base in an array. The propulsor blades are mounted to the hub. The propulsor blades project radially out from the outer periphery of the hub into an environment external to the aircraft propulsion system.

In an embodiment of the above, the assembly may also include a turbine engine configured to drive rotation of the rotor base about the axis. The turbine engine may include a flowpath, a compressor section, a combustor section and a turbine section. The flowpath may extend through the compressor section, the combustor section and the turbine section. The flowpath may be fluidly coupled to and downstream of the channels.

In an embodiment according to any of the previous embodiments, the propulsor blades may be exposed to an environment external to the aircraft propulsion system.

In an embodiment according to any of the previous embodiments, the assembly may also include an open propulsor rotor for the aircraft propulsion system. The open propulsor rotor may include the rotor base and the plurality of propulsor blades.

In an embodiment according to any of the previous embodiments, the assembly may also include a duct and a ducted propulsor rotor. The ducted propulsor rotor may be housed within the duct. The ducted propulsor rotor may include the rotor base and the plurality of propulsor blades.

In an embodiment according to any of the previous embodiments, the propulsor blades may include a first propulsor blade. The first propulsor blade may be disposed circumferentially between a neighboring pair of the air passages.

In an embodiment according to any of the previous embodiments, the propulsor blades may include a first propulsor blade. The first propulsor blade may be configured to pivot about a pivot axis to change a pitch of the first propulsor blade.

In an embodiment according to any of the previous embodiments, the air passages may include a first air passage. The first air passage may project radially into the hub from the outer periphery of the hub.

In an embodiment according to any of the previous embodiments, the air passages may include a first air passage. The first air passage may project radially into the nose cone from an outer periphery of the nose cone.

In an embodiment according to any of the previous embodiments, the air passages may include a first air passage. A lateral width of the first air passage may change as the first air passage extends radially in the rotor base.

In an embodiment according to any of the previous embodiments, the air passages may include a first air passage. A lateral width of at least a portion of the first air passage may increase as the first air passage extends radially in the rotor base towards the axis.

In an embodiment according to any of the previous embodiments, the air passages may include a first air passage. A lateral width of at least a portion of the first air passage may increase as the first air passage extends radially in the rotor base away from the axis.

In an embodiment according to any of the previous embodiments, the air passages may include a first air passage. A longitudinal trajectory of the first air passage may extend circumferentially about the axis.

In an embodiment according to any of the previous embodiments, the assembly may also include a compressor section, a combustor section, a turbine section and a flowpath. The flowpath may extend through the compressor section, the combustor section and the turbine section. The flowpath may be fluidly coupled to and downstream of the passage outlets.

In an embodiment according to any of the previous embodiments, the assembly may also include a stationary structure housing the compressor section, the combustor section and the turbine section. The stationary structure may include a splitter structure. The splitter structure may include a splitter leading edge axially next to the hub. The splitter structure may project axially along the axis to the splitter leading edge.

In an embodiment according to any of the previous embodiments, the splitter leading edge may be radially aligned with the outer periphery of the hub.

In an embodiment according to any of the previous embodiments, the assembly may also include a plurality of guide vanes arranged circumferentially about the stationary structure in an array. The guide vanes may be mounted to the stationary structure. The guide vanes may project radially out from the stationary structure respectively to a plurality of vane tips.

In an embodiment according to any of the previous embodiments, the propulsor blades may include a first propulsor blade. The splitter structure may project axially into a notch of the first propulsor blade to the splitter leading edge.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system with an open propulsor rotor.
FIG. 2 is a partial schematic illustration of the aircraft propulsion system of FIG. 1 at a propulsion section during a forward thrust mode of operation.
FIG. 3 is a cross-sectional illustration of a propulsor blade.
FIG. 4 is a cross-sectional illustration of the propulsor blade at an aperture.
FIG. 5 is a partial schematic illustration of the aircraft propulsion system of FIG. 1 at the propulsion section during a reverse thrust mode of operation.
FIG. 6 is a partial schematic illustration of the aircraft propulsion system with another open propulsor rotor arrangement.
FIGS. 7A and 7B are partial schematic illustrations of the aircraft propulsion system with other open propulsor rotor arrangements.
FIG. 8 is a partial schematic illustration of the aircraft propulsion system with another open propulsor rotor arrangement.
FIGS. 9A and 9B are partial schematic illustrations of the aircraft propulsion system with still other open propulsor rotor arrangements.
FIG. 10 is a partial schematic illustration of the aircraft propulsion system with another nose cone-rotor hub arrangement.
FIG. 11 is a partial schematic illustration of the aircraft propulsion system with another nose cone-rotor hub arrangement.
FIG. 12 is a partial front end schematic illustration of the aircraft propulsion system with the nose cone-rotor hub arrangement of FIG. 11.
FIG. 13 is a partial schematic illustration of the aircraft propulsion system with still another nose cone-rotor hub arrangement.
FIG. 14 is a schematic illustration of the aircraft propulsion system with a ducted propulsor rotor.

### DETAILED DESCRIPTION

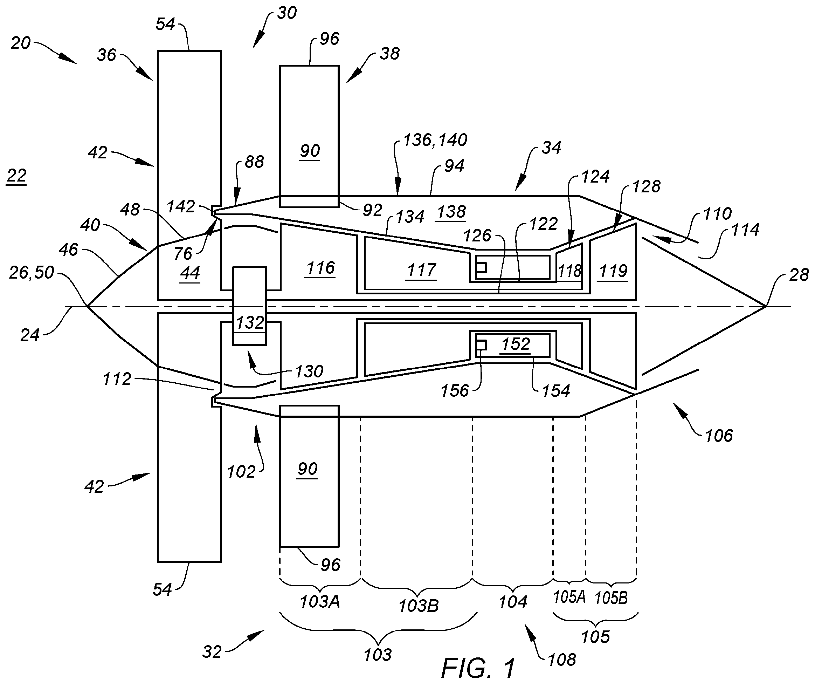

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 of the aircraft propulsion system 20 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module), a gas turbine engine 32 and a stationary housing structure 34.

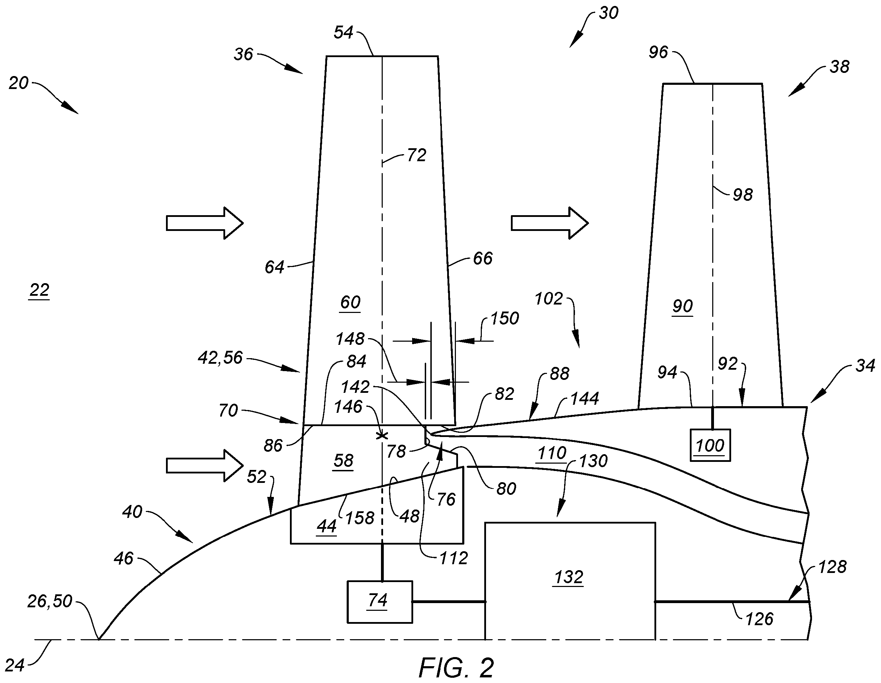

Referring to FIG. 2, the propulsion section 30 includes an open propulsor rotor 36 and an open guide vane structure 38. These propulsion section members 36 and 38 are un-ducted components of the aircraft propulsion system 20 and its propulsion section 30.

The propulsor rotor 36 includes a rotor base 40 and a plurality of open propulsor blades 42 (e.g., airfoils). The rotor base 40 of FIG. 2 includes a rotor hub 44 and a nose cone 46 connected to and rotatable with the rotor hub 44. This rotor base 40 may be configured as a unitary body where the nose cone 46 is formed integral with the rotor hub 44. Alternatively, the rotor base 40 may be configured as a multi-segment body where the nose cone 46 and the rotor hub 44 are discretely formed and then mechanically fastened, bonded (e.g., welded) and/or otherwise attached together. The rotor hub 44 is configured as a support and mount for the propulsor blades 42. The rotor hub 44 also forms an inner platform 48 for the propulsor rotor 36 axially along the propulsor blades 42 at a radial outer periphery of the rotor hub 44. The nose cone 46 is disposed at (e.g., on, adjacent or proximate) the propulsion system forward end 26. The nose cone 46 projects axially out from the rotor hub 44 to an upstream, forward tip end 50 of the rotor base 40 and its nose cone 46 at the propulsion system forward end 26. A radial outer periphery of the nose cone 46 extends axially out from the forward tip end 50 and radially out from the propulsion system axis 24 to the outer periphery of the rotor hub 44. The outer periphery of the nose cone 46 and the outer periphery of the rotor hub 44 may thereby form a radial outer periphery 52 of the rotor base 40, which outer periphery 52 of the rotor base 40 borders and extends along the external environment 22.

The propulsor blades 42 are arranged and may be equispaced circumferentially about the rotor base 40, its rotor hub 44 and the propulsion system axis 24 in an array; e.g., a circular array. This array of the propulsor blades 42 may be unshrouded or alternatively shrouded by a tubular propulsor rotor shroud dedicated to the propulsor rotor 36 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface of the inner platform 48, into the external environment 22, to a distal tip 54 of the respective propulsor blade 42. Each of the propulsor blades 42 is thereby configured as an un-ducted propulsor blade which is exposed to (e.g., disposed in) the surrounding external environment 22.

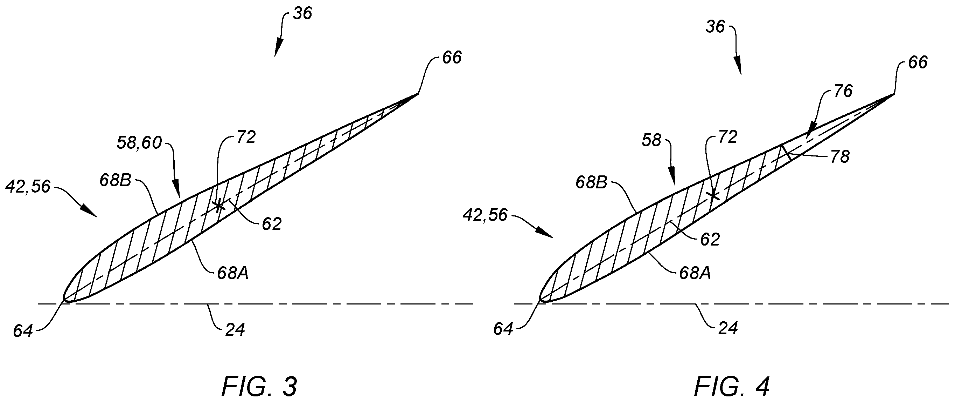

Each of the propulsor blades 42 may be configured as a propulsor blade structure 56 with multiple spanwise sections. Each of the propulsor blades 42, for example, may include an inner fixed section 58 and an outer variable section 60. Referring to FIG. 3, each propulsor blade 42 and each of its blade sections 58, 60 may extend longitudinally along a mean line 62 (e.g., a camber line) of the respective propulsor blade 42 from a leading edge 64 of the respective propulsor blade 42 to a trailing edge 66 of the respective propulsor blade 42. Each propulsor blade 42 and each of its blade sections 58, 60 may extend widthwise (e.g., perpendicular to the mean line 62) between and to opposing sides 68A and 68B (generally referred to as "68") of the respective propulsor blade 42. These blade sides 68 extend longitudinally along the mean line 62 and meet at the blade leading edge 64 and the blade trailing edge 66 of the respective propulsor blade 42.

The fixed section 58 of FIG. 2 is fixedly connected to the rotor base 40 and its rotor hub 44. This fixed section 58 projects spanwise out from the exterior surface of the inner platform 48 / the outer periphery 52 to a spanwise intersection 70 with the variable section 60.

The variable section 60 of FIG. 2 projects spanwise out from the spanwise intersection 70 with the fixed section 58 to the blade tip 54 of the respective propulsor blade 42. This variable section 60 is movably mounted with the fixed section 58 and the rotor hub 44. The variable section 60 of FIG. 2 is thereby configured to move (e.g., pivot) relative to the fixed section 58. The variable section 60 of each propulsor blade 42, for example, may be configured to pivot about a respective blade pivot axis 72. This blade pivot axis 72 extends generally radially relative to the propulsion system axis 24. The variable section 60 of each propulsor blade 42 is operatively coupled with a blade actuation system 74. This blade actuation system 74 is configured to pivot the variable section 60 of each propulsor blade 42 about its respective blade pivot axis 72. By pivoting the variable section 60 of each propulsor blade 42 about its blade pivot axis 72, a pitch of the respective propulsor blade 42 and its variable section 60 may be changed. Of course, it is contemplated the variable section 60 of some or all of the propulsor blades 42 may be alternatively moved to change the propulsor blade pitch and/or another propulsor blade parameter such as blade camber.

Each of the propulsor blade structures 56 and its propulsor blade 42 may also be configured with an aperture 76 such as a notch. Referring to FIG. 4, this blade structure aperture 76 projects longitudinally along the mean line 62 into the respective propulsor blade 42 from the blade trailing edge 66 to a distal longitudinal end 78 of the blade structure aperture 76. More particularly, the blade structure aperture 76 of FIG. 4 projects longitudinally into the fixed section 58 from the blade trailing edge 66 to the longitudinal end 78 of the blade structure aperture 76. Referring to FIG. 2, the blade structure aperture 76 extends spanwise within the respective propulsor blade 42 between and to opposing spanwise sides 80 and 82 of the blade structure aperture 76. Here, the inner side 80 of the blade structure aperture 76 is formed by the fixed section 58 of FIG. 2. The outer side 82 of the blade structure aperture 76 is formed by the variable section 60 of FIG. 2. With this arrangement, the blade structure aperture 76 of FIG. 2 projects spanwise into the fixed section 58 (in a radial inward direction towards the propulsion system axis 24) from a radial outer end 84 of the fixed section 58 to the inner side 80 of the blade structure aperture 76, where the outer end 84 of the fixed section 58 is spanwise / radially adjacent an inner end 86 of the variable section 60. Referring to FIG. 4, the blade structure aperture 76 extends widthwise through the respective propulsor blade 42 and its fixed structure between the blade sides 68. Referring again to FIG. 2, the blade structure aperture 76 is configured as a receptacle for a splitter structure 88 of the housing structure 34 as described below in further detail.

The guide vane structure 38 of FIG. 2 includes a plurality of open exit guide vanes 90 (e.g., airfoils) that are arranged and may be equispaced circumferentially about the propulsion system axis 24 in an array; e.g., a circular array. This array of the guide vanes 90 may be unshrouded or alternatively shrouded by a tubular guide vane shroud dedicated to the guide vane structure 38 for example. The guide vane structure 38 and its guide vanes 90 are arranged axially next to the propulsor rotor 36 and its propulsor blades 42. The guide vane structure 38 and its guide vanes 90 of FIG. 2, for example, are arranged downstream of the propulsor rotor 36 and its propulsor blades 42, without (e.g., any) other elements axially therebetween to obstruct, turn and/or otherwise influence the air propelled by the propulsor rotor 36 to the guide vane structure 38 for example. Each of the guide vanes 90 of FIG. 2 is coupled to a support structure 92 of the housing structure 34 (see also FIG. 1). This support structure 92 may be configured as or otherwise include a support frame, a case and/or another fixed structure of the housing structure 34. Each of the guide vanes 90 projects spanwise along a span line of the respective guide vane 90 (e.g., radially relative to the propulsion system axis 24) out from an exterior surface 94 of the housing structure 34, into the external environment 22, to a distal tip 96 of the respective guide vane 90. Here, the exterior surface 94 radially borders the external environment 22 and forms an exterior aerodynamic flow surface of the aircraft propulsion system 20. Each guide vane 90 is thereby configured as an un-ducted guide vane which is exposed to (e.g., disposed in) the surrounding external environment 22.

Each guide vane 90 may be configured to pivot about a respective vane pivot axis 98. This vane pivot axis 98 extends generally radially relative to the propulsion system axis 24. Each guide vane 90 of FIG. 2 is operatively coupled with a vane actuation system 100. This vane actuation system 100 may be discrete from or integrated as part of the blade actuation system 74. The vane actuation system 100 is configured to pivot each guide vane 90 about its own respective vane pivot axis 98. By pivoting each guide vane 90 about its vane pivot axis 98, a pitch of the respective guide vane 90 may be changed. Of course, it is contemplated some or all of the guide vanes 90 may be alternatively moved to change the guide vane pitch and/or another guide vane parameter such as vane camber. Moreover, it is contemplated some or all of the guide vanes 90 may alternatively be fixed position guide vanes in other embodiments.

Referring to FIG. 1, the aircraft propulsion system 20 and its turbine engine 32 include an inlet section 102, a compressor section 103, a combustor section 104, a turbine section 105 and an exhaust section 106. The compressor section 103 of FIG. 1 includes a low pressure compressor (LPC) section 103A and a high pressure compressor (HPC) section 103B. The turbine section 105 of FIG. 1 includes a high pressure turbine (HPT) section 105A and a low pressure turbine (LPT) section 105B. At least (or only) the LPC section 103A, the HPC section 103B, the combustor section 104, the HPT section 105A and the LPT section 105B collectively form a core 108 (e.g., a gas generator) of the turbine engine 32. The aircraft propulsion system 20 and its turbine engine 32 also include an engine flowpath 110; e.g., an annular core flowpath. This engine flowpath 110 extends longitudinally through the engine core 108 from an airflow inlet 112 into the engine flowpath 110 to a combustion products exhaust 114 from the engine flowpath 110. The flowpath inlet 112 of FIG. 1 is also an airflow inlet into the aircraft propulsion system 20 and its turbine engine 32. The flowpath exhaust 114 of FIG. 1 is also a combustion products exhaust from the aircraft propulsion system 20 and its turbine engine 32.

The LPC section 103A includes a bladed low pressure compressor (LPC) rotor 116. The HPC section 103B includes a bladed high pressure compressor (HPC) rotor 117. The HPT section 105A includes a bladed high pressure turbine (HPT) rotor 118. The LPT section 105B includes a bladed low pressure turbine (LPT) rotor 119. Each of these engine rotors 116-119 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 110. Each of the rotor blades is connected to the respective rotor base. Each of the rotor blades projects radially (e.g., spanwise) out from the respective rotor base into the engine flowpath 110 and to a distal tip of the respective rotor blade.

The HPC rotor 117 is coupled to and rotatable with the HPT rotor 118. The HPC rotor 117 of FIG. 1, for example, is connected to the HPT rotor 118 by a high speed shaft 122. At least (or only) the HPC rotor 117, the HPT rotor 118 and the high speed shaft 122 collectively form a high speed rotating structure 124; e.g., a high speed spool of the turbine engine 32 and its engine core 108. This high speed rotating structure 124 of FIG. 1 and its members 117, 118 and 122 are rotatable about the propulsion system axis 24. However, in other embodiments, the high speed rotating structure 124 may alternatively be rotatable about another rotational axis which is (e.g., laterally and/or angularly) offset from the rotational axis of the propulsor rotor 36.

The LPC rotor 116 is coupled to and rotatable with the LPT rotor 119. The LPC rotor 116 of FIG. 1, for example, is connected to the LPT rotor 119 by a low speed shaft 126. At least (or only) the LPC rotor 116, the LPT rotor 119 and the low speed shaft 126 collectively form a low speed rotating structure 128; e.g., a low speed spool of the turbine engine 32 and its engine core 108. This low speed rotating structure 128 of FIG. 1 and its members 116, 119 and 126 are rotatable about the propulsion system axis 24. However, in other embodiments, the low speed rotating structure 128 may alternatively be rotatable about another rotational axis which is (e.g., laterally and/or angularly) offset from the rotational axis of the propulsor rotor 36.

The low speed rotating structure 128 is coupled to the propulsor rotor 36 and its rotor hub 44 through a drivetrain 130. This drivetrain 130 may be configured as a geared drivetrain, where a geartrain 132 (e.g., a transmission, a speed change device, an epicyclic geartrain, etc.) is disposed between and operatively couples the propulsor rotor 36 to the low speed rotating structure 128 and its LPT rotor 119. With this arrangement, the propulsor rotor 36 may rotate at a different (e.g., slower) rotational speed than the low speed rotating structure 128 and its LPT rotor 119. Here, the propulsor rotor 36 and the low speed rotating structure 128 may rotate in a common (the same) direction about the propulsion system axis 24 or in opposite directions about the propulsion system axis 24 depending, for example, upon the specific configuration of the geartrain 132. Alternatively, the drivetrain 130 may be configured as a direct-drive drivetrain, where the geartrain 132 is omitted. With such an arrangement, the propulsor rotor 36 rotates at a common (the same) rotational speed as the low speed rotating structure 128 and its LPT rotor 119.

The engine sections 102-106 may be arranged sequentially along the propulsion system axis 24 and are housed within and/or formed by the housing structure 34. This housing structure 34 includes an engine case 134 (e.g., a gas generator case), a propulsion system nacelle 136 and an internal housing compartment 138. The engine case 134 houses one or more of the engine sections 103A-105B; e.g., the engine core 108. The engine case 134 of FIG. 1, for example, extends axially along (e.g., axially overlaps) and extends circumferentially about (e.g., circumscribes) the engine sections 103A-105B and their respective engine rotors 116-119. The engine case 134 may also house at least a portion of the drivetrain 130 and its geartrain 132. The propulsion system nacelle 136 houses and provides an aerodynamic cover over the engine case 134. An exterior wall 140 of the propulsion system nacelle 136 of FIG. 1, for example, is disposed radially outboard of, extends axially along (e.g., axially overlaps) and extends circumferentially about (e.g., circumscribes) the engine core 108 and its engine case 134. This nacelle wall 140 of FIG. 1 forms a portion of the exterior surface 94 downstream and aft of the guide vane structure 38 and its guide vanes 90. The housing compartment 138 of FIG. 1 is at least partially or completely formed by and is disposed radially between the engine case 134 and the nacelle wall 140. With the foregoing arrangement, the engine rotors 116-119 are disposed within the housing structure 34. By contrast, the propulsor rotor 36 and the guide vane structure 38 are disposed at least partially (or completely) outside of the housing structure 34 within the external environment 22.

Referring to FIG. 2, the housing structure 34 also include the splitter structure 88. This splitter structure 88 may be configured as an annular eagle beak structure. The splitter structure 88 of FIG. 2, for example, is located axially between the guide vane structure 38 and the propulsor rotor 36. More particularly, the splitter structure 88 of FIG. 2 projects axially along the propulsion system axis 24 out from the support structure 92 to a leading edge 142 (e.g., an annular leading edge) of the housing structure 34 and its splitter structure 88. The splitter leading edge 142 forms a radial outer peripheral boundary of the flowpath inlet 112. An outer exterior wall 144 of the splitter structure 88 of FIG. 2 extends axially from the splitter leading edge 142 to (or about) the guide vane structure 38 and its guide vanes 90. The splitter structure 88 of FIG. 2 and its exterior wall 144 may thereby form a portion of the exterior surface 94 upstream and forward of the guide vane structure 38 and its guide vanes 90.

The splitter leading edge 142 of FIG. 2 is radially aligned with a common (the same) reference location 146 on each of the propulsor blades 42. For ease of description, the reference location 146 is described below and shown in FIG. 2 as being located along the respective blade pivot axis 72; e.g., an intermediate location longitudinally between the blade leading edge 64 and the blade trailing edge 66. However, it is contemplated the reference location 146 may alternatively be located along a leading edge plane defined by the blade leading edges 64 of the propulsor blades 42, or a trailing edge plane defined by the blade trailing edges 66 of the propulsor blades 42. Referring again to FIG. 2, the reference location 146 is located radially inboard of a fifty percent (50%) span location along the respective propulsor blade 42. Here, a zero percent (0%) span location is disposed at the exterior surface of the inner platform 48, and a one-hundred percent (100%) span location is disposed at the blade tip 54. More particularly, the reference location 146 may be located at or radially inboard of a twenty-five percent (25%) span location or a fifteen percent (15%) span location along the respective propulsor blade 42. In the arrangement of FIG. 2, the reference location 146 is disposed along the fixed section 58 of the respective propulsor blade 42. Moreover, the reference location 146 is spaced radially inboard from the spanwise intersection 70 between the blade sections 58 and 60 of the respective propulsor blade 42.

During at least a forward thrust mode of aircraft propulsion system operation, the splitter structure 88 and its splitter leading edge 142 may be received in the blade structure apertures 76. The splitter structure 88 of FIG. 2, for example, projects axially into the blade structure aperture 76 of each propulsor blade 42 to the splitter leading edge 142. In this arrangement, the splitter structure 88 of FIG. 2 is spaced radially inboard from each variable section 60 and the outer side 82 of each blade structure aperture 76 by a radial outer air gap. The splitter structure 88 of FIG. 2 is spaced radially outboard from each fixed section 58 and the inner side 80 of each blade structure aperture 76 by a radial inner air gap. The splitter leading edge 142 is spaced axially from each propulsor blade 42 and its fixed section 58 by an axial air gap. More particularly, the splitter leading edge 142 is axially spaced from each propulsor blade 42 and its fixed section 58 by an axial blade-splitter distance 148. This axial blade-splitter distance 148 may be an axial distance measured parallel to the propulsion system axis 24 extending from the splitter leading edge 142 to a point along the longitudinal end 78 of the blade structure aperture 76 radially aligned with the reference location 146.

With the splitter structure 88 received in the blade structure apertures 76, each of the propulsor blades 42 axially overlaps the splitter structure 88. The variable section 60 of the propulsor blade 42 of FIG. 2, for example, extends axially along the splitter structure 88 away from the splitter leading edge 142 as that variable section 60 extends longitudinally to the blade trailing edge 66 of the respective propulsor blade 42. Here, a trailing edge portion of the variable section 60 axially overlaps the splitter structure 88 for an axial overlap distance 150 when the variable section 60 of the propulsor blade 42 is in a forward thrust pitch position. This axial overlap distance 150 may be an axial distance measured parallel to the propulsion system axis 24 extending from the splitter leading edge 142 to an axially aftmost point along the blade trailing edge 66 of the respective propulsor blade 42 and its variable section 60. In some embodiments, the axial overlap distance 150 may by equal to or greater than twenty-five percent (25%) of the axial blade-splitter distance 148. More particularly, the axial overlap distance 150 may by equal to or greater than the axial blade-splitter distance 148, or even two times (2x), five times (5x) or more the axial blade-splitter distance 148. By increasing the axial overlap distance 150, the splitter leading edge 142 may be shifted further forward along the propulsion system axis 24. This shifts the flowpath inlet 112 further forward along the propulsion system axis 24 and may also facilitate a more axially compact aircraft propulsion system.

During the forward thrust operating mode of the aircraft propulsion system 20 of FIG. 1, ambient air within the external environment 22 is propelled by the rotating propulsor rotor 36 in the downstream, aft direction towards the propulsion system aft end 28. A major portion (e.g., more than 50%) of this air bypasses the turbine engine 32 to provide forward thrust while a minor portion (e.g., less than 50%) of the air flows into the aircraft propulsion system 20 and its turbine engine 32. More particularly, the air propelled by the rotating propulsor rotor 36 is split by the splitter structure 88 into an outer stream of the air and an inner stream of the air. The outer stream of the air propelled by the rotating propulsor rotor 36 flows axially across the guide vane structure 38 and outside of the housing structure 34 and its exterior surface 94. The guide vane structure 38 conditions (e.g., straightens out, de-swirls, etc.) the outer stream of air within the external environment 22 to enhance the forward thrust. By contrast, an inner stream of the air propelled by the rotating propulsor rotor 36 may bypass the guide vane structure 38 and enter the turbine engine 32 and its engine flowpath 110 through the flowpath inlet 112. The air entering the engine flowpath 110 through the flowpath inlet 112 may be referred to as "core air".

The core air is compressed by the LPC rotor 116 and the HPC rotor 117 and directed into a combustion chamber 152 (e.g., an annular combustion chamber) of a combustor 154 (e.g., an annular combustor) in the combustor section 104. Fuel is injected into the combustion chamber 152 by one or more fuel injectors 156 and mixed with the compressed core air to provide a fuel-air mixture. This fuel-air mixture is ignited and combustion products thereof flow through and sequentially drive rotation of the HPT rotor 118 and the LPT rotor 119. The rotation of the HPT rotor 118 and the LPT rotor 119 respectively drive rotation of the HPC rotor 117 and the LPC rotor 116 and, thus, compression of the core air. The rotation of the LPT rotor 119 also drives the rotation of the propulsor rotor 36 through the drivetrain 130 and its geartrain 132. The turbine engine 32 and its low speed rotating structure 128 thereby power operation of (e.g., drive rotation of) the propulsor rotor 36 during aircraft propulsion system operation.

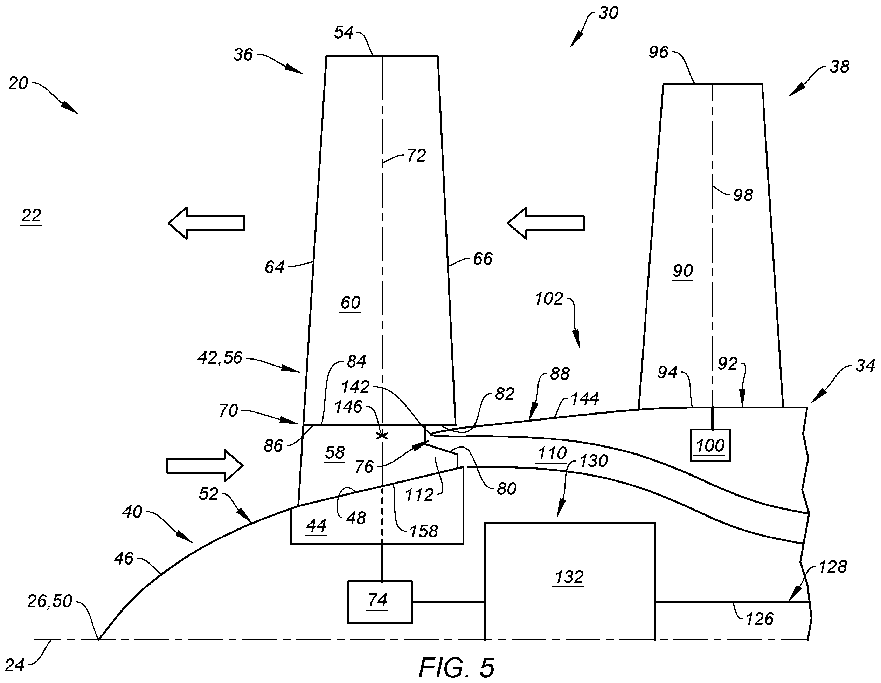

In some embodiments, referring to FIG. 5, the variable section 60 of each propulsor blade 42 may be pivoted by the blade actuation system 74 to facilitate a reverse thrust mode of aircraft propulsion system operation. During this reverse thrust operating mode, the rotating propulsor rotor 36 and its variable sections 60 may propel an outer stream of the ambient air in an axial forward direction; e.g., towards the propulsion system forward end 26. However, with the flowpath inlet 112 aligned with the fixed sections 58 of the propulsor blades 42, the fixed sections 58 of the propulsor blades 42 may continue to propel the inner stream of air into the engine flowpath 110. The turbine engine 32 and its engine core 108 (see FIG. 1) may thereby readily continue to receive an inflow of the core air during the reverse thrust operating mode.

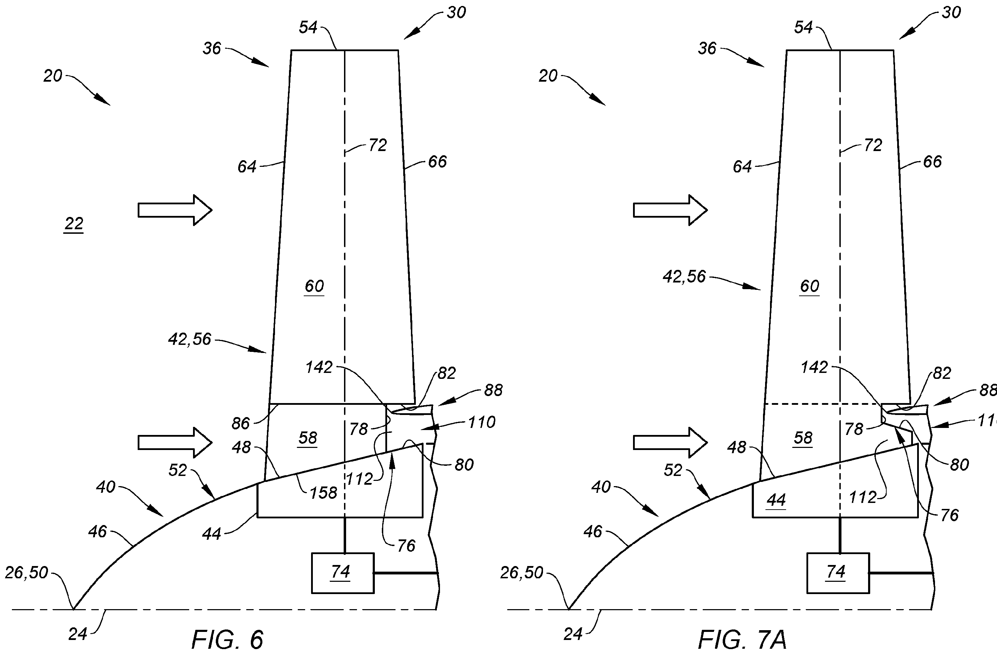

In some embodiments, referring to FIGS. 2 and 5, the blade structure aperture 76 in each propulsor blade 42 may extend spanwise / radially within the respective propulsor blade 42. In other embodiments, referring to FIG. 6, the blade structure aperture 76 in each propulsor blade 42 may project spanwise / radially into the respective propulsor blade 42. The inner side 80 of the blade structure aperture 76 of FIG. 6, for example, is formed by the exterior surface of the inner platform 48. More particularly, the blade structure aperture 76 of FIG. 6 projects spanwise / radially through the fixed section 58 from a base end 158 of the respective propulsor blade 42 to the inner end 86 of the variable section 60 of the respective propulsor blade 42.

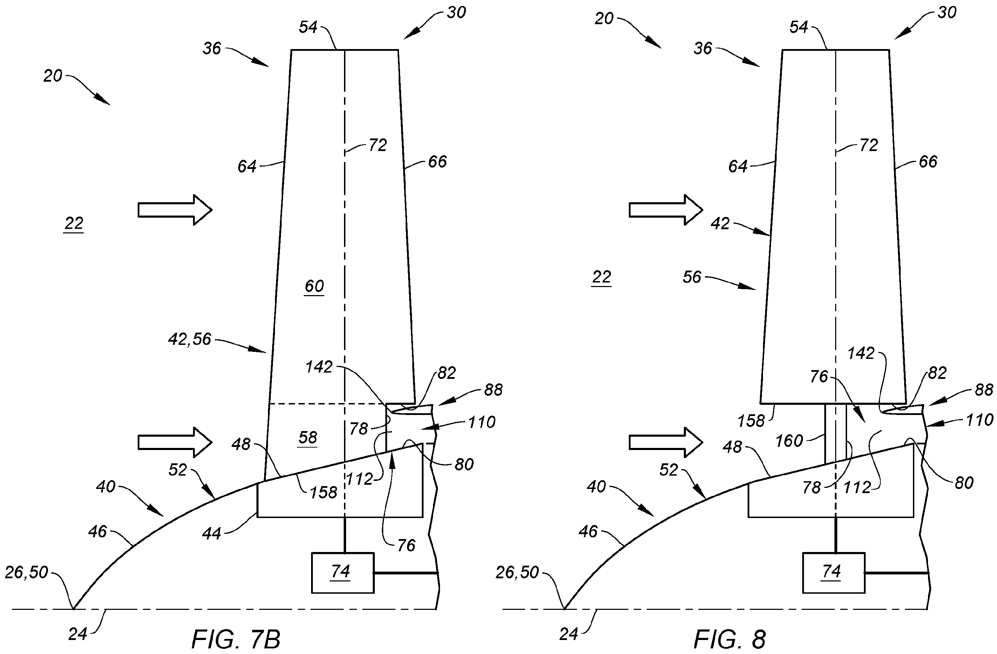

While each propulsor blade 42 is described above with the propulsor blade structure 56 including multiple discrete spanwise sections, the propulsor blades 42 of the present disclosure are not limited to such exemplary arrangements. For example, referring to FIGS. 7A and 7B, the blade sections 58 and 60 may alternatively be configured as different regions of a single unitary propulsor blade structure 56. The inner and the outer blade sections 58 and 60 of FIGS. 7A and 7B, for example, are formed integral with one another such that the entire propulsor blade 42 may pivot about its blade pivot axis 72. It is also worth noting, by providing each propulsor blade 42 with the elongated blade structure aperture arrangement of FIG. 7B, a chord length of the propulsor blade 42 is reduced at its blade base end 158. Reducing the chord length of the propulsor blade 42 at its blade base end 158 may facilitate pivoting each propulsor blade 42 about its blade pivot axis 72 from a forward thrust position, through a flat pitch position, to a reverse thrust position without clashing with neighboring propulsor blades 42 at the flat pitch position. In another example, referring to FIG. 8, the inner blade section described above may be omitted from the respective propulsor blade structure 56. More particularly, the inner blade section may be replaced by a spar 160 such as a cylindrical shaft. The spar 160 of FIG. 8 is connected to and pivotable with the respective propulsor blade 42 about the blade pivot axis 72. Here, the spar 160 operatively couples the respective propulsor blade 42 to the blade actuation system 74. This spar 160 forms the longitudinal end 78 of the blade structure aperture 76. The outer side 82 of the blade structure aperture 76 is formed by the respective propulsor blade 42 at its base end 158. The inner side 80 of the blade structure aperture 76 is formed by the exterior surface of the inner platform 48. With this arrangement, ambient air may continue to readily flow into the engine flowpath 110 through the flowpath inlet 112 even where the propulsor blades 42 are in their reverse thrust positions.

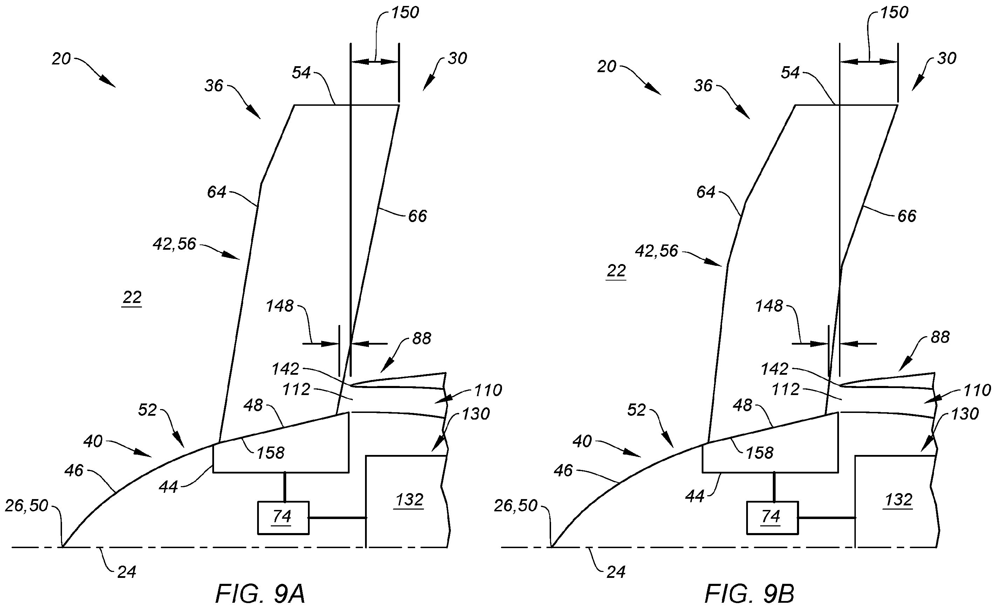

While each propulsor blade structure 56 is described above with a blade structure aperture 76 such as a notch, the propulsor blades 42 of the present disclosure are not limited to such exemplary arrangements. For example, referring to FIGS. 9A and 9B, each propulsor blade 42 may alternatively be swept axially aft such that at least a tip portion of the respective propulsor blade 42 axially overlaps the splitter structure 88 for the axial overlap distance 150 at least during the forward thrust operating mode of the aircraft propulsion system 20. In some embodiments, referring to FIG. 9A, an entirety of each propulsor blade 42 may be swept. In other embodiments, referring to FIG. 9B, a radial outer portion of each propulsor blade 42 may be swept. With the arrangements of FIGS. 9A and 9B, the axial blade-splitter distance 148 is measured between the splitter leading edge 142 and the blade trailing edge 66.

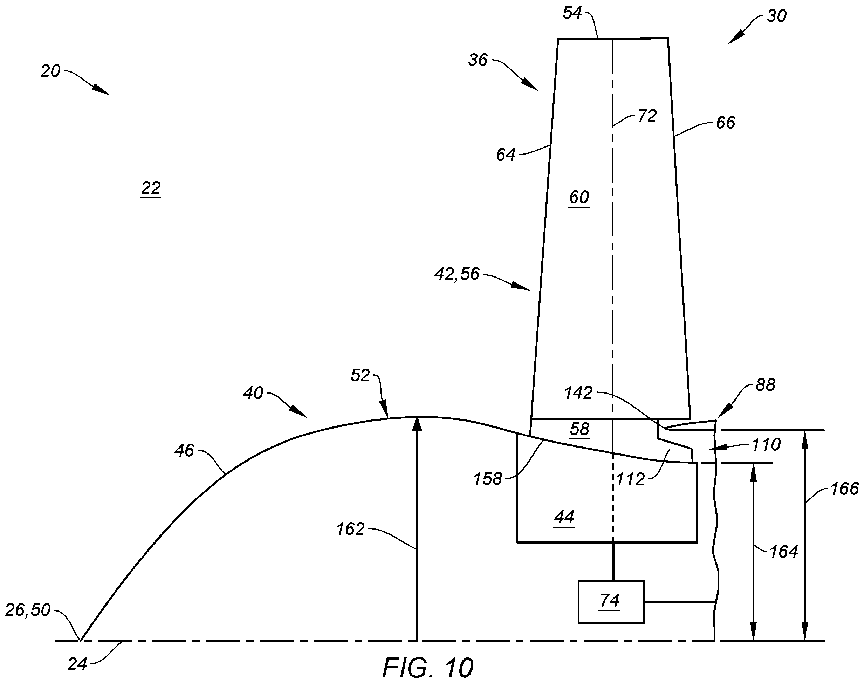

In some embodiments, referring to FIG. 10, the rotor base 40 may be configured such that a maximum radius 162 from the propulsion system axis 24 to the outer periphery of the nose cone 46 is greater than a radius 164 from the propulsion system axis 24 to an inner peripheral boundary of the flowpath inlet 112. The nose cone radius 162, for example, may be equal to or within five percent (5%) or ten percent (10%) of a radius 166 from the propulsion system axis 24 to the splitter leading edge 142. With this arrangement, the rotor base 40 and its nose cone 46 may direct debris radially outward away from the flowpath inlet 112.

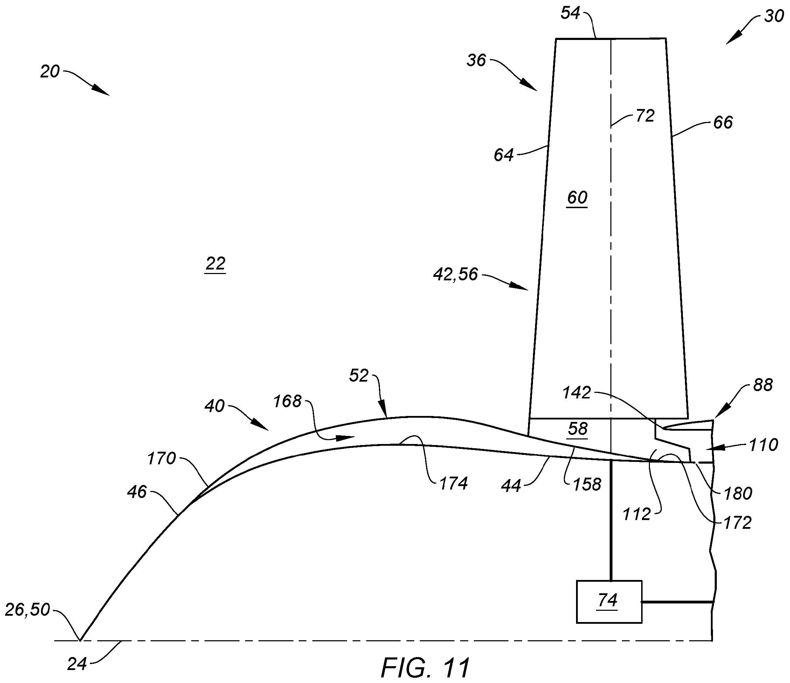

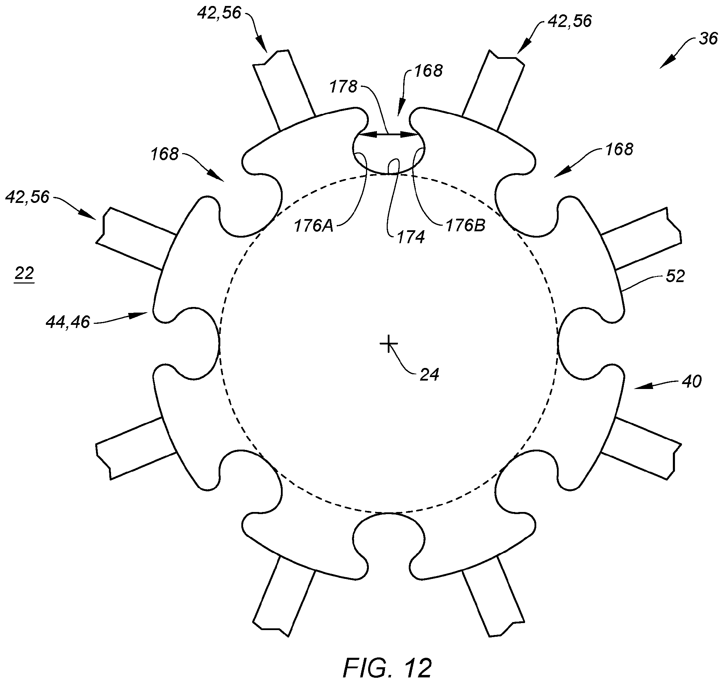

In some embodiments, referring to FIGS. 11 and 12, the rotor base 40 may be configured with one or more air passages 168; e.g., air flow channels. Referring to FIG. 12, the air passages 168 are arranged and may be equispaced circumferentially about the propulsion system axis 24 in an array; e.g., an annular array. These air passages 168 may be interspersed with the propulsor blade structures 56 and their propulsor blades 42. Each propulsor blade 42 of FIG. 12, for example, is disposed circumferentially between a neighboring pair of the air passages 168. Similarly, each air passage 168 of FIG. 12 is disposed circumferentially between a neighboring pair of the propulsor blades 42.

Referring to FIG. 11, each air passage 168 extends axially through the rotor base 40 and its members 44 and 46 from an airflow inlet 170 into the respective air passage 168 to an airflow outlet 172 from the respective air passage 168. The passage inlet 170 of FIG. 11 is formed by the nose cone 46 and pierces the outer periphery of the nose cone 46. The passage outlet 172 of FIG. 11 is formed by the rotor hub 44 and pierces the outer periphery of the rotor hub 44. Each air passage 168 projects radially inward into the rotor base 40 and its members 44 and 46 from the outer periphery 52 of the rotor base 40 (e.g., the outer peripheries of the rotor base members 44 and 46) to a radial inner side 174 of the respective air passage 168. Referring to FIG. 12, each air passage 168 extends laterally (e.g., circumferentially or tangentially) within the rotor base 40 and its members 44 and 46 between opposing lateral sides 176A and 176B (generally referred to as "176") of the respective air passage 168. Each air passage 168 has a lateral width 178 measured between the opposing lateral sides 176 of the respective air passage 168. This lateral width 178 may change as the respective air passage 168 extends radially in the rotor base 40 and its members 44 and 46. The lateral width 178 of FIG. 12, for example, may decrease, then increase and then decrease as the respective air passage 168 projects radially into the rotor base 40 from the outer periphery 52 of the rotor base 40 to (or about) the inner side 174 of the respective air passage 168. Each air passage 168 of FIG. 12, for example, has a dovetailed cross-sectional geometry when viewed in a reference plane perpendicular to the propulsion system axis 24. The present disclosure, however, is not limited to such an exemplary arrangement.

Referring to FIG. 11, the air passages 168 are arranged axially forward of the flowpath inlet 112. These air passages 168 are also fluidly coupled inline with, and upstream of, the flowpath inlet 112. Discrete flows of the ambient air may thereby flow through the air passages 168 and into the engine flowpath 110 through the flowpath inlet 112 during operation of the aircraft propulsion system 20. With such an arrangement, the engine flowpath 110 may readily receive the ambient air substantially independent of pitches of the propulsor blades 42. In addition, it is contemplated a longitudinal trajectory of each air passage 168 from its passage inlet 170 to its passage outlet 172 may extend circumferentially (e.g., partially wrap around) about the propulsion system axis 24. With such an arrangement, the rotor base 40 may be configured as an air mover such as an impeller which compresses the air flowing through the air passages 168. The air passages 168 may thereby function as air compression passages.

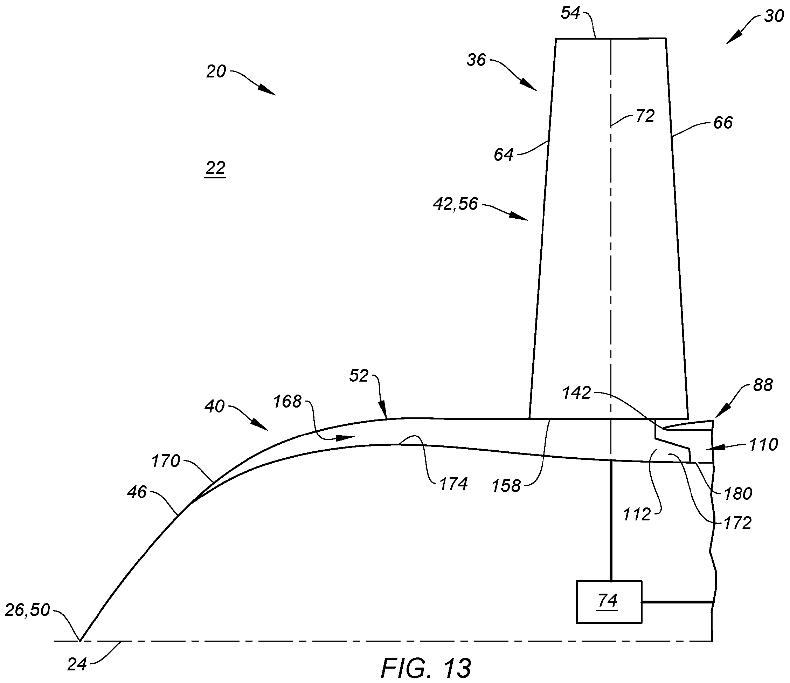

In some embodiments, referring to FIG. 11, the outer periphery 52 of the rotor base 40 at an axial aft end 180 of the rotor base 40 (e.g., an axial aft end of the rotor hub 44) may be recessed radially inward from the splitter leading edge 142. The outer periphery 52 of the rotor base 40 at the aft end 180 of the rotor base 40 of FIG. 11, for example, may be radially aligned with the inner peripheral boundary of the flowpath inlet 112. With such an arrangement, the air entering the engine flowpath 110 may be received through the air passages 168 as well as from radially outboard of the rotor base 40. In other embodiments, referring to FIG. 13, the outer periphery 52 of the rotor base 40 at the aft end 180 of the rotor base 40 may be radially aligned with (or close to) the splitter leading edge 142. With such an arrangement, substantially all of the air entering the engine flowpath 110 may flow through the air passages 168.

While the turbine engine 32 of FIG. 1 is described above with a particular two rotating structure arrangement (e.g., a two-spool architecture), the present disclosure is not limited thereto. For example, the LPC rotor 116 may be omitted to configure the LPT rotor 119 as a power turbine (PT) rotor for the propulsor rotor 36. The turbine engine 32 may also or alternatively include another rotating structure with a bladed compressor rotor in the compressor section 103 and a bladed turbine rotor in the turbine section 105; e.g., an intermediate speed spool for the engine core 108.

The guide vane structure 38 is described above as a fixed (e.g., non-rotatable) guide vane structure. It is contemplated, however, the guide vane structure 38 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 36 and the structure 38 are counter-rotating about the propulsion system axis 24); and (B) a single open rotor and swirl recovery vane (SRV) propulsion system during a single rotor mode of operation (e.g., when the propulsor rotor 36 is rotating and the structure 38 is rotationally fixed about the propulsion system axis 24). Note, when the guide vane structure 38 is configured to selectively rotate about the propulsion system axis 24, the moving guide vanes 90 operate as propulsor blades.

The aircraft propulsion system 20 of FIG. 1 and its propulsion section 30 are described as including the guide vane structure 38 with an SRV or SRB configuration. The present disclosure, however, is not limited to such an exemplary propulsion system configuration. For example, the aircraft propulsion system 20 may alternatively be configured without an open guide vane structure. The aircraft propulsion system 20 may thereby be configured as a single rotor (SR) open rotor propulsion system. In another example, the aircraft propulsion system 20 may alternatively be configured with a set of the open propulsor rotors (e.g., counter-rotating propulsor rotors) operatively coupled to the turbine engine 32 (see FIG. 1) through the geartrain 132. The aircraft propulsion system 20 may thereby be configured as a counter-rotating open rotor (CROR) propulsion system.

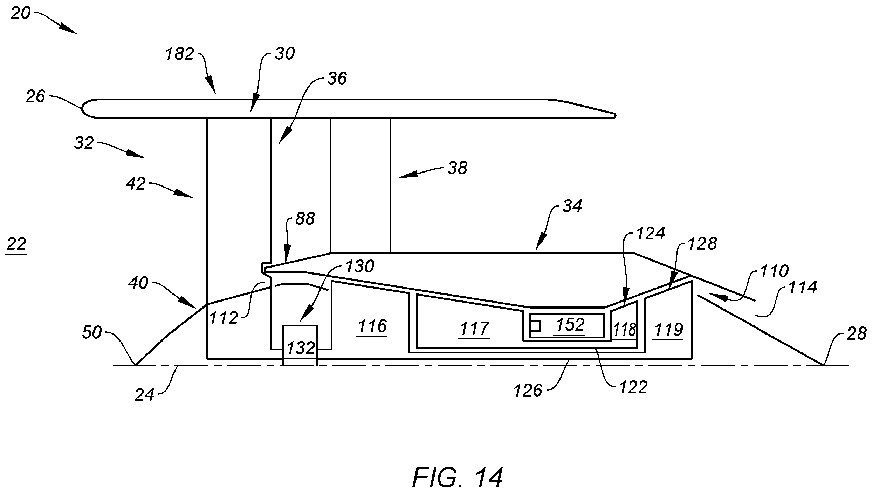

While the propulsor rotor 36 is described above as an open propulsor rotor, the present disclosure is not limited to open rotor propulsion system applications. For example, referring to FIG. 14, the aircraft propulsion system 20 may alternatively be configured as a ducted rotor propulsion system such as a turbofan propulsion system. The aircraft propulsion system 20 of FIG. 14, for example, includes an outer housing structure 182 that forms a duct housing the propulsor rotor 36. The propulsor rotor 36 of FIG. 14 is thereby configured as a ducted propulsor rotor such as a fan rotor, and the propulsor section 30 is configured as a fan section of the turbine engine 32.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (20), comprising:
a rotor base (40) configured to rotate about an axis (24), the rotor base (40) including a hub (44), a nose cone (46) and a plurality of air passages (168), the nose cone (46) projecting axially along the axis (24) out from the hub (44) to a forward tip end (50) of the rotor base (40), the plurality of air passages (168) arranged circumferentially about the axis (24) in an array and located radially inboard of an outer periphery of the hub (44), the plurality of air passages (168) projecting axially through the rotor base (40), the plurality of air passages (168) respectively including a plurality of passage inlets (170) and a plurality of passage outlets (172), the plurality of passage inlets (170) formed in the nose cone (46), and the plurality of passage outlets (172) formed in the hub (44); and
a plurality of propulsor blades (42) arranged circumferentially about the rotor base (40) in an array, the plurality of propulsor blades (42) mounted to the hub (44), and the plurality of propulsor blades (42) projecting radially out from the outer periphery of the hub (44) respectively to a plurality of blade tips (54).

2. The assembly of claim 1, further comprising an open propulsor rotor (36) for the aircraft propulsion system (20), the open propulsor rotor (36) comprising the rotor base (40) and the plurality of propulsor blades (42).

3. The assembly of claim 1, further comprising:
a duct; and
a ducted propulsor rotor (36) housed within the duct, the ducted propulsor rotor (36) comprising the rotor base (40) and the plurality of propulsor blades (42).

4. The assembly of claim 1, 2 or 3, wherein
the plurality of propulsor blades (42) comprises a first propulsor blade (42); and
the first propulsor blade (42) is disposed circumferentially between a neighboring pair of the plurality of air passages (168).

5. The assembly of any preceding claim, wherein
the plurality of propulsor blades (42) comprises a/the first propulsor blade (42); and
the first propulsor blade (42) is configured to pivot about a pivot axis (72) to change a pitch of the first propulsor blade (42).

6. The assembly of any preceding claim, wherein
the plurality of air passages (168) comprise a first air passage (168); and
the first air passage (168) projects radially into the hub (44) from the outer periphery of the hub.

7. The assembly of any preceding claim, wherein
the plurality of air passages (168) comprise a/the first air passage (168); and
the first air passage (168) projects radially into the nose cone (46) from an outer periphery of the nose cone (46).

8. The assembly of any preceding claim, wherein
the plurality of air passages (168) comprise a/the first air passage (168); and
a lateral width (178) of the first air passage (168) changes as the first air passage (168) extends radially in the rotor base (40).

9. The assembly of any preceding claim, wherein
the plurality of air passages (168) comprise a/the first air passage (168); and
a lateral width (178) of at least a portion of the first air passage (168) increases as the first air passage (168) extends radially in the rotor base (40) towards the axis (24).

10. The assembly of any preceding claim, wherein
the plurality of air passages (168) comprise a/the first air passage (168); and
a lateral width (178) of at least a portion of the first air passage (168) increases as the first air passage (168) extends radially in the rotor base (40) away from the axis (24).

11. The assembly of any preceding claim, wherein
the plurality of air passages (168) comprise a/the first air passage (168); and
a longitudinal trajectory of the first air passage (168) extends circumferentially about the axis (24).

12. The assembly of any preceding claim, further comprising:
a compressor section (103);
a combustor section (104);
a turbine section (105); and
a flowpath (110) extending through the compressor section (103), the combustor section (104) and the turbine section (105), the flowpath (110) fluidly coupled to and downstream of the plurality of passage outlets (172).

13. The assembly of claim 12, further comprising a stationary structure (34) housing the compressor section (103), the combustor section (104) and the turbine section (105), the stationary structure (34) comprising a splitter structure (88), the splitter structure (88) comprising a splitter leading edge (142) axially next to the hub (44), and the splitter structure (88) projecting axially along the axis (24) to the splitter leading edge (142), optionally wherein the splitter leading edge (142) is radially aligned with the outer periphery of the hub (44).

14. The assembly of claim 13, further comprising a plurality of guide vanes (90) arranged circumferentially about the stationary structure (34) in an array, the plurality of guide vanes (90) mounted to the stationary structure (34), and the plurality of guide vanes (90) projecting radially out from the stationary structure (34) respectively to a plurality of vane tips (96).

15. The assembly of claim 13 or 14, wherein
the plurality of propulsor blades (42) comprises a first propulsor blade (42); and
the splitter structure (88) projects axially into a notch (76) of the first propulsor blade (42) to the splitter leading edge (142).
